# EUROPÄISCHE PATENTSCHRIFT

(11) **EP 2 803 259 B1**
(45) Veröffentlichungstag und Bekanntmachung des Hinweises auf die Patenterteilung: **10.01.2018**
(21) Anmeldenummer: 14158465.6
(22) Anmeldetag: 10.03.2014
(51) Int. Cl.: A01F 15/14

(54) **Kombination aus einem Zugfahrzeug und einer landwirtschaftlichen Ballenpresse**
Combination of a traction vehicle and an agricultural baler
Combinaison d'un véhicule de traction et d'une presse à balles agricole

(30) Priorität: 14.05.2013 DE 102013104934
(43) Veröffentlichungstag der Anmeldung: 19.11.2014
(73) Patentinhaber: Usines CLAAS France, 57141 Metz (FR)
(72) Erfinder: Chesnier, Frédéric, 54700 orroy les Pont á Mousson (FR); Scharf, Thorsten, 66693 Orscholz (DE); Waechter, Julien, 57640 Failly (FR)
(74) Vertreter: Budach, Steffen

(56) Entgegenhaltungen:
- EP-A1- 2 108 245
- EP-A1- 2 183 955
- EP-A1- 2 292 085
- EP-A1- 2 759 194
- EP-A2- 1 066 745
- DE-C- 810 819
- GB-A- 2 206 662

## Beschreibung

Die Erfindung betrifft eine Kombination aus einem Zugfahrzeug, insbesondere einem Traktor, und einer landwirtschaftlichen Ballenpresse gemäß dem Oberbegriff des Anspruchs 1.

Landwirtschaftliche Ballenpressen werden eingesetzt, um Erntegut zu Ballen zu pressen. Üblicherweise handelt es sich dabei um Erntemaschinen, die von einem Zugfahrzeug, insbesondere einem Traktor über das Feld gezogen werden. Da Ballenpressen in der Regel keinen eigenen Antriebsmotor aufweisen, werden die für den Betrieb nötigen Förder- und Pressaggregate der Ballenpresse vom Zugfahrzeug mit Antriebsleistung versorgt. Dies erfolgt üblicherweise über einen standardmäßig an Traktoren vorhandenen heckseitigen Zapfwellenabtrieb, der dann mit einer (Haupt-) Antriebswelle der Ballenpresse in Antriebsverbindung gebracht wird.

Bei sogenannten Quaderballenpressen werden - alternativ zu beispielsweise Rundballenpressen - die gepressten Ballen mit Bindegarn verschnürt, das anschließend verknotet wird. Die aus stark verdichtetem Erntegut gepressten Ballen behalten dadurch weitestgehend deren Form, indem das umgebende Bindegarn den Rückdehnungskräften innerhalb des Ballens entgegenwirkt. Dabei kommt eine Knoteinrichtung zum Einsatz, die im Wesentlichen eine Zuführeinrichtung (insbesondere Garnnadel) für das Bindegarn sowie einen Knotapparat zum Halten, Verknoten und Trennen des Bindegarns umfasst. Die Knoteinrichtung wird üblicherweise ebenfalls über die Hauptantriebswelle der Ballenpresse, somit vom Zugfahrzeug angetrieben. Aufgrund des erforderlichen technisch anspruchsvollen Zusammenwirkens verschiedener Funktionselemente weisen bekannte Knoteinrichtungen regelmäßig eine mechanisch komplexe Anordnung auf. Abhängig von der Bauart der Knoteinrichtung können bei (oder nach) dem Binde- und Knotvorgang Fehlfunktionen auftreten. Beispielsweise wenn ein Knoten nach einem Bindevorgang den Knoterhaken nicht verlässt. Die nächste Ballenbindung kann dann zu einer Beschädigung des Knoters führen, bedingt durch eine Kollision mit dem vorigen, noch festsitzenden Knoten. Auch die Nadel kann durch eine so verursachte Kollision beschädigt werden.

Aus der EP 2 183 955 A1 ist ein landwirtschaftliches Leistungssteuerungssystem für eine Quaderballenpresse bekannt, bei der notwendige Drehmomentanforderungen anhand früherer Beobachtungen entwickelt werden.

Aufgrund der Gefahr von Beschädigungen an der Knoteinrichtung beobachten erfahrene Fahrer während des Erntebetriebs deren Funktion. Dazu wird beispielsweise eine die Knoteinrichtung optisch erfassende Kamera verwendet und wird dem Fahrer über eine in der Fahrerkabine des Zugfahrzeugs angeordnete Anzeigeeinrichtung (Monitor) das erfasste Kamerabild wiedergegeben. Da übliche Ballenpressen zumeist eine Vielzahl von bezogen auf den Presskanal nebeneinander angeordneten Knotereinheiten umfassen (beispielsweise sechs), erfordert die Beobachtung in jedem Fall eine hohe Aufmerksamkeit. Da der Fahrer zugleich die Lage des aufzunehmenden Erntegutschwads sowie den Zustand der Pickup der Ballenpresse im Blick haben muss, erschwert die erforderliche Beobachtung der Knoteinrichtung den Erntebetrieb in nachteiliger Weise.

Es ist daher eine Aufgabe der vorliegenden Erfindung, eine Kombination aus einem Zugfahrzeug und einer Ballenpresse anzugeben, mit der Beschädigungen der Ballenpresse, die aufgrund von Fehlern beim Binde- und/oder Knotvorgang auftreten können, vermieden werden und die den Fahrer von der Tätigkeit der Beobachtung der Knoteinrichtung entlastet.

Die genannte Aufgabe wird gelöst durch eine Kombination gemäß den Merkmalen des Anspruchs 1. Diese zeichnet sich aus durch eine Steuereinrichtung, die betreibbar ist, bei Erreichen eines kritischen Betriebszustands der Knoteinrichtung die Antriebsverbindung zwischen Zugfahrzeug und Ballenpresse zu unterbrechen. In vorteilhafter Weise kann damit eine Überwachung der Knoteinrichtung durchgeführt werden, wobei im Fall eines kritischen Betriebszustands, also insbesondere wenn (beispielsweise aufgrund eines Knotens, der den Knoterhaken nicht korrekt verlässt) eine erhöhte Gefahr einer Beschädigung der Knoteinrichtung besteht, die Steuereinrichtung selbsttätig dafür sorgt, dass (trotz kritischem Betriebszustand) Beschädigungen verhindert werden. Um dies sicherzustellen, veranlasst die Steuereinrichtung in diesem Fall eine Unterbrechung der Antriebsverbindung zwischen Zugfahrzeug und Ballenpresse. Durch die so veranlasste Unterbrechung werden sowohl die Knoteinrichtung als auch die übrigen Aggregate der Ballenpresse - ohne Zutun des Fahrers - gestoppt, so dass zunächst die beweglichen Elemente der Knoteinrichtung angehalten werden und nicht mehr kollidieren können. Zudem wird auch der Gutstrom innerhalb der Ballenpresse auf diese Weise schnellstmöglich gestoppt, so dass (schwer zu entfernende) Materialaufstauungen innerhalb der Ballenpresse vermieden werden. Aufgrund der selbsttätigen Durchführung der Antriebsunterbrechung ist der Fahrer von der Aufgabe der Überwachung der Knoteinrichtung entlastet und kann sich besser auf andere Aufgaben konzentrieren. Weiterhin sorgt die selbsttätige Durchführung der Antriebsunterbrechung für eine in der Regel kürzere Reaktionszeit, als bei "manueller Beobachtung" durch den Fahrer, da eine menschliche Handlungsverzögerung zwischen Erkennen einer Fehlbindung und Durchführen einer geeigneten Maßnahme (Unterbrechen des Antriebs) entfällt. Weiterhin entfällt das Risiko, dass der Fahrer eine Fehlfunktion der Knoteinrichtung - beispielsweise aus Unachtsamkeit oder aus Unerfahrenheit - überhaupt nicht bemerkt. Die eingangs genannte Aufgabe wird somit gelöst.
Grundsätzlich sind verschiedene Antriebsanordnungen denkbar, die eine Unterbrechung des Antriebs der Ballenpresse ermöglichen. Vorteilhafterweise lässt sich die Antriebsverbindung zwischen Ballenpresse und Zugfahrzeug über einen zu- und abschaltbaren Zapfwellenabtrieb des Zugfahrzeugs herstellen, wobei die Steuereinrichtung mit dem Zugfahrzeug in Signalverbindung steht, um bei Erreichen des kritischen Betriebszustands ein Abschalten des Zapfwellenabtriebs zu veranlassen. In diesem Fall wird die Antriebsverbindung demnach am Zugfahrzeug unterbrochen, was den Vorteil mit sich bringt, dass die Ballenpresse keine eigene Kupplung des Antriebsstrangs aufzuweisen braucht. Indem die Steuereinrichtung mit dem Zugfahrzeug in Signalverbindung steht, kann stattdessen eine dem Zugfahrzeug zugeordnete Kupplung durch entsprechende Ansteuerung betätigt werden.
Gemäß einer vorteilhaften Weiterbildung der Erfindung ist die Ballenpresse über eine Antriebswelle antreibbar, wobei dem Zugfahrzeug eine Kupplungseinrichtung zugeordnet ist, die sich unter Ansteuerung durch die Steuereinrichtung zwischen einem geschlossenen Zustand, bei dem eine Antriebsverbindung zwischen einem Antriebsmotor des Zugfahrzeugs und der Antriebswelle der Ballenpresse besteht, und einem geöffneten Zustand verstellen lässt, bei dem diese Antriebsverbindung unterbrochen ist.
Eine vorteilhafte Ausgestaltung sieht vor, dass das Abschalten des Zapfwellenabtriebs auch ein Abbremsen des Zapfwellenabtriebs umfasst, wozu der Kupplungseinrichtung eine Bremseinrichtung zugeordnet ist. Auf besonders vorteilhafte Weise ist demnach dem Zugfahrzeug eine mit einer Bremseinrichtung kombinierte Kupplungseinrichtung zugeordnet, in der Weise, dass bei Unterbrechung der Antriebsverbindung die Aggregate der Ballenpresse von der Bremseinrichtung des Zugfahrzeugs mit abgebremst werden. Dies sorgt - gegenüber einem reinen Auskuppeln - für eine nochmals verkürzte Reaktionszeit.

Zweckmäßigerweise ist weiterhin die Steuereinrichtung der Ballenpresse zugeordnet, wobei die Steuereinrichtung mit dem Zugfahrzeug, insbesondere mit der Kupplungseinrichtung in Signalverbindung steht, um durch Ansteuerung des Zugfahrzeugs, insbesondere der Kupplungseinrichtung die Antriebsverbindung zwischen Zugfahrzeug und Ballenpresse unterbrechen zu können. Durch die Zuordnung der Steuereinrichtung zur Ballenpresse ergibt sich der Vorteil, dass verschiedene Typen von Zugfahrzeugen auf einfache Weise mit der Ballenpresse kombinierbar sind. Eine für die Knoteinrichtung erforderliche Sensorik zur Erfassung von Betriebszuständen einschließlich darauf abgestimmter Auswerteinrichtung ist dann zweckmäßigerweise der Ballenpresse zugeordnet.

Zur Gewährleistung eines schnellen, sicheren und standardisierten (Kompatibilität mit unterschiedlichen Herstellern) Informationsaustauschs zwischen Ballenpresse und Zugfahrzeug erfolgt die Kommunikation zwischen der Steuereinrichtung und dem Zugfahrzeug bevorzugt über ein Bussystem, insbesondere gemäß ISOBUS-Standard. Andere Arten der drahtgebundenen und/oder drahtlosen Kommunikation sind denkbar.

Die Knoteinrichtung der Ballenpresse kann grundsätzlich von unterschiedlicher Bauart sein, wobei insbesondere bei Knoteinrichtungen ohne Zwangsabzug des Bindegarns die Gefahr von am Knoterhaken festsitzenden Knoten (und damit die Gefahr von Doppel- und Mehrfachbindungen) besteht. Zweckmäßigerweise ist der Knoteinrichtung zumindest ein Knoter sowie zumindest ein Sensor zur Erfassung eines kritischen Zustands der Knoteinrichtung zugeordnet. Der Sensor kann auf verschiedene Weise arbeiten, um einen kritischen Zustand der Knoteinrichtung zu erfassen. Bei einem kritischen Zustand der Knoteinrichtung handelt es sich dabei insbesondere um einen Zustand, bei dem eine erhöhte Gefahr von Beschädigungen an Elementen (Knoter, Klemmrad, Nadel) der Knoteinrichtung besteht, insbesondere aufgrund einer möglichen Kollision zwischen Knoter, Nadel und/oder mit Bindegarn erstellten Knoten.

Gemäß einer vorteilhaften Weiterbildung der Erfindung ist der Knoteinrichtung eine Anordnung unterschiedlicher Sensoren zur Erfassung von Betriebszuständen der Knoteinrichtung zugeordnet, wobei die Steuereinrichtung betreibbar ist, aus dem Vorliegen vorgebbarer Betriebszustände auf einen kritischen Zustand der Knoteinrichtung zu schließen und eine Unterbrechung der Antriebsverbindung zu veranlassen. In der Steuereinrichtung kann dazu beispielsweise eine Logik hinterlegt sein, welche die erfassten Sensorwerte unter Berücksichtigung von Verknüpfungen (zum Beispiel "und/oder"-Bedingungen bzw. Boolsche Operatoren) auswertet. Denkbar ist zudem, dass die Steuereinrichtung - neben Betriebszuständen der Knoteinrichtung - sonstige Betriebszustände und/oder Betriebsparameter der Ballenpresse und/oder des Zugfahrzeugs mit heranzieht, um einen kritischen Betriebszustand der Knoteinrichtung zu identifizieren.

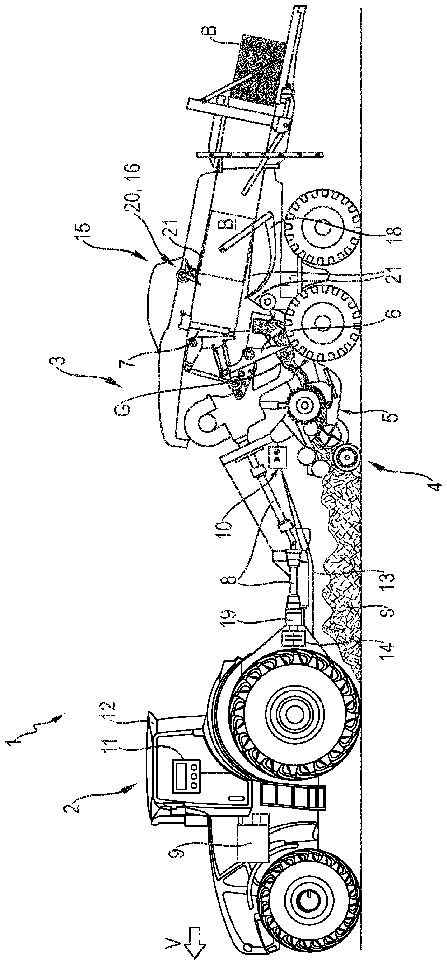

Die Erfindung wird im Folgenden anhand eines Ausführungsbeispiels näher erläutert. Dazu wird verwiesen auf die Zeichnung. Darin zeigt die einzige
- Fig.: eine erfindungsgemäße Kombination in schematischer Seitenansicht bei Fahrt über ein Feld.

Die Fig. zeigt in schematischer Seitenansicht eine erfindungsgemäße Kombination 1 umfassend ein Zugfahrzeug in Form eines Traktors 2 und eine davon gezogene landwirtschaftliche Erntemaschine in Form einer Quaderballenpresse 3 bei der Feldfahrt.

Ein Antriebsmotor des Traktors 2 ist - auf für sich übliche Weise - Teil eines Antriebsstrangs des Fahrantriebs des Traktors 2, d.h. dient zum Antrieb der Räder des Traktors 2. Abhängig von der Motordrehzahl des Antriebsmotors 9 sowie einer gewählten Getriebeübersetzung zieht der Traktor 2 die Ballenpresse 3 mit eine durch einen Pfeil angedeuteten Fahrgeschwindigkeit v über das Feld.

Die Ballenpresse 3 weist verschiedene Arbeitsaggregate 4, 5, 6, 7 zur Förderung und/oder Bearbeitung von Erntegut auf. Frontseitig befindet sich eine Pick-up 4, mit der in Form eines Schwads S abgelegtes Erntegut G vom Feldboden aufgenommen, seitlich zusammengeführt und zur weiteren Bearbeitung in den Gutkanal der Ballenpresse 3 gefördert wird. Das Erntegut G durchläuft anschließend eine mit einem Schneidrotor ausgestattete Schneideinrichtung 5 und wird anschließend von einem periodisch Sammel- und Füllhübe ausführenden Raffer 6 vorverdichtet, um portionsweise (jeweils durch einen Füllhub des Raffers 6) einer Presskammer zugeführt zu werden, in der ein hin- und herbeweglicher Presskolben 7 das Erntegut G zu Ballen B presst. Fertige Ballen B verlassen die Ballenpresse 3 heckseitig.

Die Aggregate 4, 5, 6, 7 der Ballenpresse 3 werden über eine Antriebswelle 8, die mit einem heckseitigen Zapfwellenabtrieb 19 des Traktors 2 verbunden ist, vom Traktor 2 mit Antriebsleistung versorgt. Dazu dient der Antriebsmotor 9 des Traktors 2, der mit dem Zapfwellenabtrieb 19 mittels einer Kupplungs- und Bremseinrichtung 14 in Antriebsverbindung bringbar ist. Im eingekuppelten Zustand bilden der Antriebsmotor 9 des Traktors 2, die Kupplungseinrichtung 14, der Zapfwellenabtrieb 19 und die Antriebswelle 8 einen Antriebsstrang für die Ballenpresse 3. Zur Verzweigung der auf die Ballenpresse 3 übertragenen Leistung auf deren einzelnen Aggregate 4, 5, 6, 7 dienen hier nicht näher zu erläuternde Getriebe. Die Ballenpresse 3 weist weiterhin eine Knoteinrichtung 15 auf. Diese umfasst auf für sich bekannte Weise zumindest ein Knoteinheit mit je einem Knoter 20 und einer Nadel 18. Bei der gezeigten Ballenpresse 3 weist die Knoteinrichtung 15 sechs Knoteinheiten auf (in der Darstellung ist nur eine zu sehen), die bezogen auf die Maschinenlängsrichtung (entspricht der Richtung des Pfeils v) nebeneinander angeordnet sind, um den Ballen B über dessen Breite gleichzeitig mit sechs Bindungen zu versehen. Die Nadel 18 jeder Knoteinheit dient dazu, nach jedem Pressvorgang eines Ballens B einen Abschnitt von Bindegarn 21 von unten durch die Presskammer nach oben zum jeweiligen Knoter 20 zu führen, woraufhin der Knoter 20 den herangeführten Abschnitt des Bindegarns 21 mit einem vom Knoter 20 seit Beginn der Ballenbildung festgehaltenen Anfangsabschnitt des Bindegarns 21 verknotet, um den Ballen B umfänglich zu umschnüren.

Bei der Erstellung eines Knotens kann es vorkommen, dass der gebildete Knoten an einem Element des Knoters 20, beispielsweise einem sogenannten Knoterhaken, hängenbleibt. Die mit einem nächsten Ballen zu erfolgende nächste Bindung kann dann den Knoter 20 beschädigen, da beim Bindevorgang eine Kollision mit dem noch nicht abgezogenen Knoten stattfindet.

An der Ballenpresse 3 ist zu diesem Zweck jeder Knoteinheit ein Knotersensor 16 zugeordnet, der dazu geeignet ist, kritische Zustände, d.h. insbesondere eine Fehlbindung beim Bindevorgang zu erfassen.

Der Knotersensor 16 ist mit einer an der Ballenpresse 3 angeordneten Steuereinrichtung 10 signalverbunden. Die Steuereinrichtung 10 empfängt demnach laufend Informationen darüber, ob an der Knoteinrichtung 15 - zumindest an einer der sechs Knoteinheiten - möglicherweise ein kritischer Betriebszustand erreicht wird. Die Steuereinrichtung 10 ist wiederum über ein Datenbussystem 13, vorzugsweise ISOBUS, mit dem Traktor 2 signalverbunden. Insbesondere ist dazu in der Fahrerkabine 12 des Traktors 2 eine für einen Fahrer zugängliche Bedien- und Anzeigeeinheit 11 angeordnet, die über das Datenbussystem 13 mit der Steuereinrichtung 10 kommunizieren kann. Die Bedien- und Anzeigeeinheit 11 verfügt neben Bedienelementen auch über eine optische Anzeige (beispielsweise ein Monitor), um dem Fahrer Betriebsparameter anzeigen zu können. Unter anderem kann sich der Fahrer auf der Anzeige den Zustand der einzelnen Knoteinheiten anzeigen lassen. Daneben ist die Steuereinrichtung 10 über das Datenbussystem 13 mit der Kupplungs- und Bremseinrichtung 14 signalverbunden.

Die Kupplungs- und Bremseinrichtung 14 stellt im eingekuppelten Zustand eine Antriebsverbindung zwischen dem Antriebsmotor 9 und dem Zapfwellenabtrieb 19 des Traktors 2 her. Im eingekuppelten Zustand der Kupplungs- und Bremseinrichtung 14 wird somit die Ballenpresse 3 über deren Antriebswelle 8 angetrieben, die mit dem Zapfwellenabtrieb 19 des Traktors antriebsverbunden ist. Im ausgekuppelten Zustand der Kupplungs- und Bremseinrichtung 14 ist dagegen die Antriebsverbindung zwischen dem Antriebsmotor 9 und dem Zapfwellenabtrieb 19 des Traktors 2 unterbrochen, wobei der Zapfwellenabtrieb 19 in diesem Fall nicht einfach entkuppelt ist (und damit frei liefe), sondern von der Kupplungs- und Bremseinrichtung 14 vorzugsweise zusätzlich abgebremst wird. Damit ist im entkuppelten Zustand der Kupplungs- und Bremseinrichtung 14 die Antriebsverbindung zwischen Traktor 2 und Ballenpresse 3 unterbrochen. Dabei wird durch die Abbremsung des Zapfwellenantriebs 19 die Ballenpresse 3 mit abgebremst, so dass deren Aggregate 4, 5, 6, 7 einschließlich Knoteinrichtung 15 in kurzer Zeit zum Stillstand kommen.

Zur Vermeidung von Beschädigungen an der Ballenpresse 3, die insbesondere durch Fehlbindungen der Knoteinrichtung 15 hervorgerufen werden können, überwacht die Steuereinrichtung 10 laufend den Zustand der Knoteinrichtung 15 mittels der Knotersensoren 16. Sobald einer der Knotersensoren 16 der Steuereinrichtung 10 ein Signal übermittelt, das auf eine Fehlfunktion (beispielsweise einen nicht abgezogenen Knoten) hinweist, gibt die Steuereinrichtung 10 über das Datenbussystem 13 ein Steuersignal an die Kupplungs- und Bremseinrichtung 14, um schnellstmöglich ein Anhalten der Antriebswelle 8 - und damit des Betriebs der Ballenpresse 3 - zu veranlassen. Vorteilhaft wird dem Fahrer eine Fehlerdiagnose auf der Bedien- und Anzeigeeinheit angezeigt, so dass er daraufhin geeignete Maßnahmen (Anhalten der Kombination 1, Kontrolle, ggf. Beheben des Fehlers an der Ballenpresse 3) einleiten kann. Insbesondere kann dem Fahrer dabei angezeigt werden, an welcher der Knoteinheiten der Fehler aufgetreten ist.

Durch die selbsttätige Abschaltung des Zapfwellenabtriebs 19 bei Fehlbindungen wird der Fahrer beim Erntebetrieb in vorteilhafter Weise von der Aufgabe entlastet, die Knoteinrichtung 15 aufmerksam überwachen zu müssen. Die selbsttätige Abschaltung erfolgt dabei prinzipbedingt sehr schnell, so dass Beschädigungen an Funktionselementen der Ballenpresse 3 wirksamer vermieden werden können, als dies bei einer manuellen Überwachung durch den Fahrer möglich wäre.

### Bezugszeichenliste

- 1: Kombination
- 2: Traktor
- 3: Ballenpresse
- 4: Pickup
- 5: Schneideinrichtung
- 6: Raffer
- 7: Presskolben
- 8: Antriebswelle
- 9: Antriebsmotor
- 10: Steuereinrichtung
- 11: Bedien- und Anzeigeeinheit
- 12: Fahrerkabine
- 13: Datenbussystem
- 14: Kupplungs- und Bremseinrichtung
- 15: Knoteinrichtung
- 16: Knotersensor
- 18: Nadel
- 19: Zapfwellenabtrieb
- 20: Knoter
- 21: Bindegarn

- S: Schwad
- G: Erntegut
- B: gepresster Ballen
- v: Fahrtrichtung

## Patentansprüche

1. Kombination (1) aus einem Zugfahrzeug (2), insbesondere einem Traktor, und einer landwirtschaftlichen Ballenpresse (3), wobei die Ballenpresse (3) zumindest ein Aggregat (4, 5, 6, 7) zur Förderung von Erntegut (G) und/oder zum Pressen von Erntegut (G) zu Ballen (B) sowie eine Knoteinrichtung (15) aufweist und mit dem Zugfahrzeug (2) in Antriebsverbindung bringbar ist, um das Aggregat (4, 5, 6, 7) und die Knoteinrichtung (15) anzutreiben,
**gekennzeichnet durch** eine Steuereinrichtung (10), die betreibbar ist, bei Erreichen eines kritischen Betriebszustands der Knoteinrichtung (15) die Antriebsverbindung zwischen Zugfahrzeug (2) und Ballenpresse (3) zu unterbrechen.

2. Kombination nach Anspruch 1, **dadurch gekennzeichnet, dass** die Antriebsverbindung zwischen Ballenpresse (3) und Zugfahrzeug (2) über einen zu- und abschaltbaren Zapfwellenabtrieb (19) des Zugfahrzeugs (2) herstellbar ist, wobei die Steuereinrichtung (10) mit dem Zugfahrzeug (2) in Signalverbindung steht, um bei Erreichen des kritischen Betriebszustands ein Abschalten des Zapfwellenabtriebs (19) zu veranlassen.

3. Kombination nach Anspruch 1 oder 2, **dadurch gekennzeichnet, dass** die Ballenpresse (3) über eine Antriebswelle (8) antreibbar ist, wobei dem Zugfahrzeug (2) eine Kupplungseinrichtung (14) zugeordnet ist, die sich unter Ansteuerung durch die Steuereinrichtung (10) zwischen einem geschlossenen Zustand, bei dem eine Antriebsverbindung zwischen einem Antriebsmotor (9) des Zugfahrzeugs (2) und der Antriebswelle (8) der Ballenpresse (3) besteht, und einem geöffneten Zustand verstellen lässt, bei dem diese Antriebsverbindung unterbrochen ist.

4. Kombination nach Anspruch 3, **dadurch gekennzeichnet, dass** das Abschalten des Zapfwellenabtriebs (19) ein Abbremsen des Zapfwellenabtriebs (19) umfasst, wozu der Kupplungseinrichtung (14) eine Bremseinrichtung zugeordnet ist.

5. Kombination nach einem der vorigen Ansprüche, **dadurch gekennzeichnet, dass** die Steuereinrichtung (10) der Ballenpresse (3) zugeordnet ist, wobei die Steuereinrichtung (10) mit dem Zugfahrzeug (2), insbesondere mit der Kupplungseinrichtung (14) in Signalverbindung steht, um durch Ansteuerung des Zugfahrzeugs (2), insbesondere der Kupplungseinrichtung (14) die Antriebsverbindung zwischen Zugfahrzeug (2) und Ballenpresse (3) unterbrechen zu können.

6. Kombination nach einem der vorigen Ansprüche, **dadurch gekennzeichnet, dass** die Kommunikation zwischen der Steuereinrichtung (10) und dem Zugfahrzeug (2) über ein Bussystem (13) erfolgt.

7. Kombination nach einem der vorigen Ansprüche, **dadurch gekennzeichnet, dass** der Knoteinrichtung (15) ein Knoter (20) sowie zumindest ein Sensor (16) zur Erfassung eines kritischen Zustands der Knoteinrichtung (15) zugeordnet ist.

8. Kombination nach einem der vorigen Ansprüche, **dadurch gekennzeichnet, dass** es sich bei einem kritischen Zustand der Knoteinrichtung (15) um einen Zustand handelt, bei dem eine erhöhte Gefahr von Beschädigungen an Elementen der Knoteinrichtung (15) besteht, insbesondere aufgrund einer möglichen Kollision zwischen Knoter (20), Nadel (18) und/oder mit Bindegarn (21) erstellten Knoten.

9. Kombination nach einem der vorigen Ansprüche, **dadurch gekennzeichnet, dass** der Knoteinrichtung (15) eine Anordnung unterschiedlicher Sensoren zur Erfassung von Betriebszuständen der Knoteinrichtung (15) zugeordnet ist, wobei die Steuereinrichtung (10) betreibbar ist, aus dem Vorliegen vorgebbarer Betriebszustände auf einen kritischen Zustand der Knoteinrichtung (15) zu schließen und eine Unterbrechung der Antriebsverbindung zu veranlassen.

## Claims

1. A combination (1) comprising a towing vehicle (2), in particular a tractor, and an agricultural bale press (3), wherein the bale press (3) has at least one assembly (4, 5, 6, 7) for conveying crop material (G) and/or for pressing crop material (G) to form bales (B), and a knotting device (15), and can be brought into drive connection relationship with the towing vehicle (2) to drive the assembly (4, 5, 6, 7) and the knotting device (15),
**characterised by** a control device (10) which is operable to interrupt the drive connection between the towing vehicle (2) and the bale press (3) upon the attainment of a critical operating state of the knotting device (15).

2. A combination according to claim 1 **characterised in that** the drive connection between the bale press (3) and the towing vehicle (2) can be made by way of a power take-off (19) of the towing vehicle (2), that can be switched on and switched off, wherein the control device (10) is in signal-conducting relationship with the towing vehicle (2) to cause switching-off of the power take-off (19) upon the attainment of the critical operating state.

3. A combination according to claim 1 or claim 2 **characterised in that** the bale press (3) is drivable by way of a drive shaft (8), wherein associated with the towing vehicle (2) is a clutch device (14) which under the control of the control device (10) is displaceable between a closed condition in which there is a drive connection between a drive engine (9) of the towing vehicle (2) and the drive shaft (8) of the bale press (3) and an opened condition in which said drive connection is interrupted.

4. A combination according to claim 3 **characterised in that** switching-off of the power take-off (19) includes braking of the power take-off (19), for which purpose a braking device is associated with the clutch device (14).

5. A combination according to one of the preceding claims **characterised in that** the control device (10) is associated with the bale press (3), wherein the control device (10) is in signal-conducting relationship with the towing vehicle (2), in particular with the clutch device (14), in order to be able to interrupt the drive connection between the towing vehicle (2) and the bale press (3) by control of the towing vehicle (2), in particular the clutch device (14).

6. A combination according to one of the preceding claims **characterised in that** the communication between the control device (10) and the towing vehicle (2) is effected by way of a bus system (13).

7. A combination according to one of the preceding claims **characterised in that** associated with the knotting device (15) is a knotter (20) and at least one sensor (16) for detecting a critical state of the knotting device (15).

8. A combination according to one of the preceding claims **characterised in that** a critical state of the knotting device (15) is a state in which there is an increased risk of damage to components of the knotting device (15), in particular by virtue of a possible collision between the knotter (20), needle (18) and/or knots produced with binding yarn (21).

9. A combination according to one of the preceding claims **characterised in that** associated with the knotting device (15) is an arrangement of different sensors for detecting operating states of the knotting device (15), wherein the control device (10) is operable to infer a critical state of the knotting device (15) from the existence of predeterminable operating states and to cause an interruption in the drive connection.

## Revendications

1. Combinaison (1) d'un véhicule tracteur (2), en particulier d'un tracteur, et d'une presse agricole à balles (3), la presse à balles (3) comportant au moins un organe (4, 5, 6, 7) pour amener du produit récolté (G) et/ou pour presser du produit récolté (G) sous forme de balles (B) ainsi qu'un équipement de nouage (15), et pouvant être amenée en liaison d'entraînement avec le véhicule tracteur (2) afin d'entraîner l'organe (4, 5, 6, 7) et l'équipement de nouage (15), **caractérisée par** un équipement de commande (10) qui est exploitable pour interrompre la liaison d'entraînement entre le véhicule tracteur (2) et la presse à balles (3) lorsqu'un état de fonctionnement critique de l'équipement de nouage (15) est atteint.

2. Combinaison selon la revendication 1, **caractérisée en ce que** la liaison d'entraînement entre la presse à balles (3) et le véhicule tracteur (2) peut être établie par l'intermédiaire d'une sortie de prise de force activable et désactivable (19) du véhicule tracteur (2), l'équipement de commande (10) étant en liaison signalétique avec le véhicule tracteur (2) pour provoquer une désactivation de la sortie de prise de force (19) lorsque le état de fonctionnement critique est atteint.

3. Combinaison selon la revendication 1 ou 2, **caractérisée en ce que** la presse à balles (3) peut être entraînée par l'intermédiaire d'un arbre d'entraînement (8), au véhicule tracteur (2) étant associé un équipement d'accouplement (14) qui, sous l'action de l'équipement de commande (10), peut être déplacé entre un état fermé, dans lequel une liaison d'entraînement existe entre un moteur d'entraînement (9) du véhicule tracteur (2) et l'arbre d'entraînement (8) de la presse à balles (3), et un état ouvert, dans lequel cette liaison d'entraînement est interrompue.

4. Combinaison selon la revendication 3, **caractérisée en ce que** la désactivation de la sortie de prise de force (19) comporte un freinage de la sortie de prise de force (19), un équipement de freinage étant associé dans ce but à l'équipement d'accouplement (14).

5. Combinaison selon une des revendications précédentes, **caractérisée en ce que** l'équipement de commande (10) est associé à la presse à balles (3), l'équipement de commande (10) étant en liaison signalétique avec le véhicule tracteur (2), en particulier avec l'équipement d'accouplement (14), afin de pouvoir interrompre la liaison d'entraînement entre le véhicule tracteur (2) et la presse à balles (3) par une action sur le véhicule tracteur (2), en particulier sur l'équipement d'accouplement (14).

6. Combinaison selon une des revendications précédentes, **caractérisée en ce que** la communication entre l'équipement de commande (10) et le véhicule tracteur (2) s'effectue par l'intermédiaire d'un système de bus (13).

7. Combinaison selon une des revendications précédentes, **caractérisée en ce qu'**à l'équipement de nouage (15) est associé un noueur (20) ainsi qu'au moins un capteur (16) pour détecter un état critique de l'équipement de nouage (15).

8. Combinaison selon une des revendications précédentes, **caractérisée en ce que** l'état critique de l'équipement de nouage (15) correspond à un état dans lequel existe un risque accru de détérioration d'éléments de l'équipement de nouage (15), en particulier en raison d'une possible collision entre le noueur (20), l'aiguille (18) et/ou des noeuds réalisés avec la ficelle de liage (21).

9. Combinaison selon une des revendications précédentes, **caractérisée en ce qu'**à l'équipement de nouage (15) est associé un agencement de divers capteurs pour détecter des états de fonctionnement de l'équipement de nouage (15), l'équipement de commande (10) pouvant être exploité pour conclure à un état critique de l'équipement de nouage (15) en présence d'états de fonctionnement prescriptibles et pour provoquer une interruption de la liaison d'entraînement.
